# EUROPÄISCHE PATENTANMELDUNG

(11) **EP 1 594 205 A1**
(43) Veröffentlichungstag der Anmeldung: **09.11.2005**
(21) Anmeldenummer: 05090100.8
(22) Anmeldetag: 12.04.2005
(51) Int. Cl.: H02G 5/06, H01B 9/06

(54) **Anordnung mit einem rohrfömigen gehäuse für eine energieübertragungseinrichtung**

(30) Priorität: 04.05.2004 DE 102004023139
(71) Anmelder: SIEMENS AKTIENGESELLSCHAFT, 80333 München (DE)
(72) Erfinder: Ebner, Andreas, 90425 Nürnberg (DE); Koch, Hermann, Dr., 91466 Gerhardshofen (DE)

(57) **Zusammenfassung**

Eine Energieübertragungseinrichtung (1) weist ein rohrförmiges Gehäuse (3) auf. Im Innern des rohrförmigen Gehäuses (3) ist ein elektrischer Leiter (2) angeordnet. Der elektrische Leiter (2) ist mit Halterungen (4, 5) an dem rohrförmigen Gehäuse (3) gelagert. Um ein Schwingen des elektrischen Leiters (2) zu verhindern, ist ein Stützelement (6) zusätzlich zwischen dem rohrförmigen Gehäuse (3) und dem elektrischen Leiter (2) angeordnet. Das Stützelement (6) weist eine veränderbare Ausdehnung auf und kann beispielsweise in Form eines Kissens ausgeführt sein.

## Beschreibung

Die Erfindung bezieht sich auf eine Anordnung mit einem rohrförmigen Gehäuse für eine Energieübertragungseinrichtung, mit einem elektrischen Leiter und mit einem Stützelement zum Abstützen des elektrischen Leiters an dem rohrförmigen Gehäuse.

Eine derartige Anordnung ist beispielsweise aus dem US-Patent US 5,565,652 bekannt. Bei der dortigen Energieübertragungseinrichtung ist ein elektrischer Leiter innerhalb eines rohrförmigen Gehäuses angeordnet. Der elektrische Leiter ist mittels Stützelementen an dem Gehäuse abgestützt. Die elektrische Energieübertragungseinrichtung ist aus einzelnen Segmenten zusammengesetzt. Die einzelnen Segmente weisen unterschiedliche Längen auf. Bei der Verlegung der bekannten Energieübertragungseinrichtung werden die einzelnen Segmente vormontiert, die vormontierten Segmente zur Baustelle transportiert und dort zusammengefügt. Durch den Transport werden das rohrförmige Gehäuse, die Stützelemente sowie der elektrische Leiter in Schwingung versetzt. Durch diese Schwingungen kann es zu Beschädigungen an den vorgefertigten Segmenten kommen. Um Beschädigungen zu vermeiden, ist ein umsichtiger Transport sowie eine umsichtige Montage auf der Baustelle notwendig. Dies erfordert einen erhöhten Zeitaufwand für den Transport, die Lagerung und die Montage der bekannten Segmente einer Energieübertragungseinrichtung.

Der vorliegenden Erfindung liegt die Aufgabe zugrunde, eine Anordnung mit einem rohrförmigen Gehäuse für eine Energieübertragungseinrichtung derart auszugestalten, dass ein schneller und schonender Transport sowie eine schnelle Montage der Segmente der Energieübertragungseinrichtung ermöglicht ist.

Die Aufgabe wird bei einer Anordnung der eingangs genannten Art erfindungsgemäß dadurch gelöst, dass die Ausdehnung des Stützelementes in Stützrichtung veränderbar ist.

Durch eine Einstellbarkeit der Ausdehnung des Stützelementes in Stützrichtung ist es möglich, eine zusätzliche Verspannung zwischen elektrischem Leiter und Gehäuse zu erzeugen. Dadurch wird ein Schwingen des Leiters unterdrückt. Die Ausdehnung kann beispielsweise durch scheren- bzw. pantographenartige oder teleskopierbare Elemente verändert werden.

Vorteilhafterweise kann weiter vorgesehen sein, dass die Änderung der Ausdehnung des Stützelementes durch eine veränderlich befüllbare Expansionskammer bewirkbar ist.

Eine Expansionskammer verändert bei einer Füllung, beispielsweise mit einem Fluid wie einem Gas oder einer Flüssigkeit, ihr Volumen. Dies kann beispielsweise dadurch geschehen, dass die Expansionskammer aus einer elastischen Membran gebildet ist, die sich bei einem erhöhten Druck ausdehnt. Weiterhin kann die Expansionskammer auch durch relativ zueinander bewegbare starre Körper, wie beispielsweise Kolben-ZylinderAnordnungen, realisiert werden. Derartige Expansionskammern haben den Vorteil, dass sie im nicht expandierten Zustand ein vergleichsweise kleines Volumen aufweisen. Aufgrund der geringen räumlichen Ausdehnung können sehr kompakte Stützelemente ausgebildet werden, welche leicht durch Engstellen hindurch an ihren Verwendungsort gebracht werden können. Erst bei Einnahme des Verwendungsortes erfolgt dann eine Befüllung der Expansionskammer und damit eine Änderung der Ausdehnung des Stützelementes in Stützrichtung. Weitere geeignete Konstruktionen zur Änderung der Ausdehnung des Stützelementes in Stützrichtung können beispielsweise durch scherenartig oder phantographenartig ausfahrbare Stützelemente gebildet sein.

Eine weitere vorteilhafte Ausführung kann vorsehen, dass das Stützelement reversibel verformbar ist.

Für bestimmte Anwendungen ist es vorteilhaft, wenn das Stützelement nur zeitweise eine Abstützung des elektrischen Leiters vornimmt. Dies kann beispielsweise während einer Montage vorgesehen sein. Nach der Umkehr der Verformung kann das Stützelement leicht wieder aus dem rohrförmigen Gehäuse herausgenommen werden. Die reversible Verformung kann dabei beispielsweise durch das Entleeren einer zuvor befüllten Expansionskammer bewirkt werden. Weiterhin kann ein umkehrbares Verformen der Stützelemente auch durch scharnierartige Konstruktionen oder teleskopartige Konstruktionen an dem Stützelement realisiert werden.

Eine weitere vorteilhafte Ausgestaltung kann vorsehen, dass das Stützelement an dem elektrischen Leiter neben einer festen Halterung des elektrischen Leiters angeordnet ist.

Durch eine Anordnung des Stützelementes neben einer festen Halterung, beispielsweise einem Isolierstützer oder einem Scheibenisolator, kann auf die mechanischen Eigenschaften der festen Halterung zurückgegriffen werden. So ist es beispielsweise möglich, das Stützelement in einer eher filigranen Weise auszugestalten und den elektrischen Leiter durch das Stützelement nur unterstützend abzustützen, während ein großer Teil des Leiters durch die feste Halterung abgestützt ist. Eine leichte Konstruktion des Stützelementes gestattet eine vereinfachte Handhabung sowie eine Verringerung der äußeren Abmaße des Stützelements. Dadurch ist das Stützelement flexibel auch durch Engstellen hindurch bewegbar. Gleichzeitig ist die Handhabung eines leichten Stützelementes in einfacher Weise möglich.

Vorteilhafterweise kann weiter vorgesehen sein, dass die Expansionskammer kissenartig zwischen dem elektrischen Leiter und einer Innenwandung des rohrförmigen Gehäuses angeordnet ist.

Eine kissenartige Expansionskammer ist je nach dem Grad ihrer Befüllung verhältnismäßig einfach in verschiedene Oberflächenformungen einfügbar. So ist eine besonders leichte Variante eines Stützelementes dadurch gebildet, dass eine kissenförmige Expansionskammer unmittelbar zwischen der Innenwandung des rohrförmigen Gehäuses und dem elektrischen Leiter eingefügt wird. Die flexibel verformbare Oberfläche der kissenförmigen Expansionskammer schmiegt sich sowohl an die Innenwand des rohrförmigen Gehäuses als auch an die dem stärker gekrümmten Mantel des elektrischen Leiters an. Durch die weiche Struktur der befüllten Expansionskammer sind Beschädigungen an der Oberfläche der Innenwandung sowie an der Oberfläche des elektrischen Leiters nicht zu befürchten.

Eine vorteilhafte Ausgestaltung kann weiterhin vorgesehen, dass das Stützelement im Wesentlichen aus einem befüllbaren flexiblen Kissen besteht.

Ein Stützelement, welches im Wesentlichen aus einem befüllbaren flexiblen Kissen besteht, ist äußerst kostengünstig herstellbar. Ein derartiges Stützelement kann beispielsweise auch für eine einmalige Verwendung vorgesehen werden und nach erfolgter Benutzung einer Entsorgung zugeführt werden.

Weiterhin kann vorteilhaft vorgesehen sein, dass das Stützelement eine schwingungsdämpfende Transportsicherung ist.

Ein Transport von vormontierten rohrförmigen Gehäusen mit eingebautem elektrischen Leiter ist von Erschütterungen begleitet. Um ein Schwingen des elektrischen Leiters im Innern des rohrförmigen Gehäuses zu verhindern, kann das erfindungsgemäße Stützelement als Transportsicherung eingesetzt werden. Derartige Transportsicherungen sind möglichst einfach in das rohrförmige Gehäuse einzubringen und auch leicht aus diesem zu entfernen. Zudem müssen Transportsicherungen möglichst kostengünstig sein. Ein in seiner Ausdehnung veränderbares Stützelement erfüllt derartige Forderungen. Insbesondere ein als flexibel befüllbares Kissen ausgebildetes Stützelement, welches bei einem Befüllen sich entfaltet und zwischen dem elektrischen Leiter und der Innenwand des rohrförmigen Gehäuses einpresst, ist als Transportsicherung geeignet.

Im Folgenden wird die Erfindung anhand eines Ausführungsbeispiels in einer Zeichnung schematisch gezeigt und nachfolgend näher erläutert.

Dabei zeigt die
- Figur 1: einen Schnitt durch ein rohrförmiges Gehäuse mit einem elektrischen Leiter und einem Stützelement, die
- Figur 2: einen Schnitt durch die in der Figur 1 dargestellte Anordnung und die
- Figur 3: einen weiteren Schnitt durch eine Anordnung mit einem rohrförmigen Gehäuse und einem elektrischen Leiter.

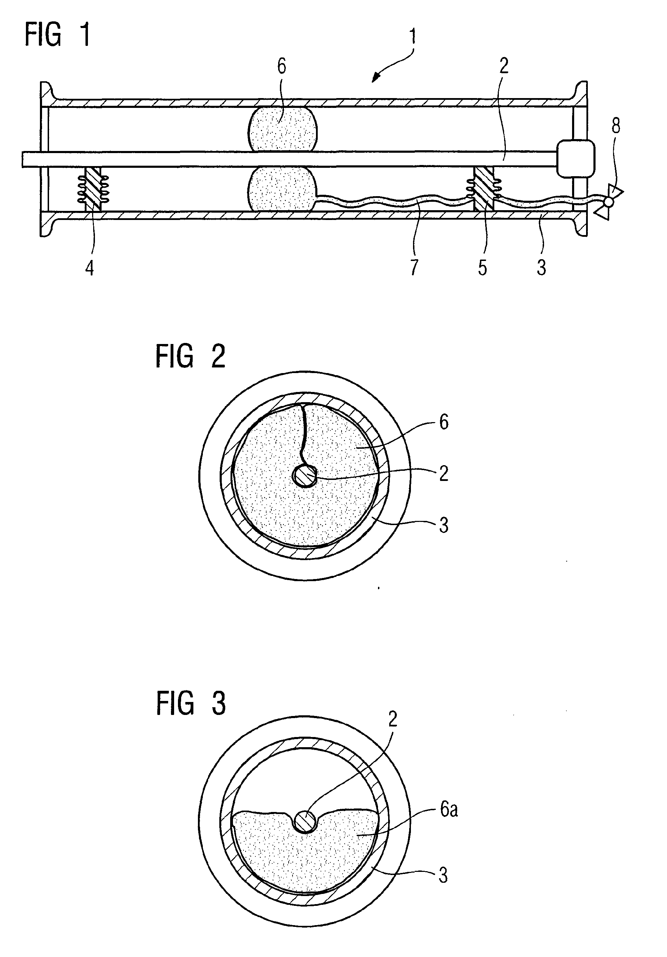

Die Figur 1 zeigt einen Schnitt durch eine Energieübertragungseinrichtung 1, die einen elektrischen Leiter 2 aufweist, welcher im Innern eines rohrförmigen Gehäuses 3 angeordnet ist. Der elektrische Leiter 2 ist mittels einer ersten Halterung 4 und einer zweiten Halterung 5 an dem rohrförmigen Gehäuse 3 abgestützt. Die erste und die zweite Halterung 4, 5 sind im vorliegenden Fall als Stützisolatoren ausgeführt. Das rohrförmige Gehäuse 3 ist aus einem elektrisch leitenden Material gebildet. Alternativ kann auch vorgesehen sein, das rohrförmige Gehäuse aus einem Isoliermaterial und die Halterungen aus einem elektrisch leitenden Material zu fertigen. Eine Vielzahl von rohrförmigen Gehäusen 3 nebst elektrischen Leitern 2 werden stirnseitig aneinander geflanscht, so dass eine langgestreckte Energieübertragungseinrichtung entsteht. Dadurch ist es möglich, elektrische Energie beispielsweise aus einem Kraftwerk in einen städtischen Ballungsraum zu übertragen.

Die erste Halterung 4 und die zweite Halterung 5 sind längs der Rohrachse des rohrförmigen Gehäuses 3 beabstandet voneinander angeordnet. Dieser Abstand ist so gewählt, dass bei einer geringst möglichen Anzahl von Halterungen der elektrische Leiter 2 keinen Durchhang aufweist. Im stationären Fall, d.h. im montierten Zustand der Energieübertragungseinrichtung 1, wird das Gesamtsystem nicht mehr bewegt, d.h. es werden auf das Gehäuse 3 bzw. den elektrischen Leiter 2 von außen keine Erschütterungen aufgeprägt. Bei einem Transport von vormontierten Gehäusen 3 ist der Abstand zwischen der ersten Halterung 4 und der zweiten Halterung 5 jedoch zu groß, um den elektrischen Leiter 2 schwingungsfrei zu halten. Beispielsweise wird so bei einem Verladen und bei dem Transport eines Gehäuses 3 und eines eingebauten elektrischen Leiters 2 der elektrische Leiter 2 in Schwingung versetzt. Dadurch wird die mechanische Verbindung zwischen dem elektrischen Leiter 2 und der ersten und der zweiten Halterung 4, 5 belastet. Durch das Einbringen einer einfach zu handhabenden und kostengünstigen Transportsicherung wird ein derartiges Schwingen eingeschränkt. Die Transportsicherung ist als Stützelement 6 ausgebildet, welches in Stützrichtung in seiner Ausdehnung veränderbar ist. Das Stützelement 6 ist als aufblasbares Kissen ausgeführt, welches sich in dem Zwischenraum zwischen rohrförmigem Gehäuse 3 und elektrischem Leiter 2 entfaltet und den elektrischen Leiter 2 einpresst. Das Stützelement 6 wird im nicht entfaltetem Zustand in das Rohr zum Ort der vorgesehenen Abstützung hineingeschoben. In diesem Zustand ist das Stützelement 6 wie eine Matte handhabbar und leicht verschiebbar und verformbar. Über ein an dem Stützelement 6 angeschlossenen Schlauch 7 ist das Stützelement 6 beispielsweise mit Druckluft befüllbar. Mit der Befüllung der Expansionskammer des Stützelementes 6 entfaltet sich die Expansionskammer und schmiegt sich an die Innenwand des Gehäuses 3 sowie an die äußere Mantelfläche des elektrischen Leiters 2 an. Mit dem Erreichen der gewünschten Befüllung ist der Schlauch 7 mittels eines Ventils 8 verschließbar. Nunmehr ist der elektrische Leiter 2 gegen Schwingungen gesichert.

In der Figur 2 ist eine Seitenansicht des expandierten Stützelementes 6 dargestellt. Die Form des Stützelementes 6 ist dabei so gewählt, dass nach erfolgter Expansion eine ringförmige Umschließung des elektrischen Leiters 2 vorliegt.

Die Figur 3 zeigt eine alternative Ausgestaltung eines Stützelementes 6a. Das Stützelement 6a ist derart gestaltet, dass der elektrische Leiter nur abschnittsweise gestützt ist. Eine vollständige Abstützung des elektrischen Leiters 2 in sämtlichen radialen Richtungen kann beispielsweise durch den Einsatz mehrerer Stützelemente 6a erfolgen, welche versetzt zueinander angeordnet sind.

Wird das Stützelement 6 nicht mehr benötigt, so kann über den Schlauch 7 und das Ventil 8 die Expansionskammer entleert werden. Dadurch nimmt das Stützelement 6 wieder eine entspannte Form an und kann flexibel auch durch kleine Öffnungen hindurch aus dem rohrförmigen Gehäuse 3 entnommen werden.

Neben einer Verwendung eines erfindungsgemäßen Stützelementes zur Transportsicherung kann auch der Einsatz derartiger Stützelemente zum dauerhaften Verbleib in einer Energieübertragungseinrichtung vorgesehen sein.

## Patentansprüche

1. Anordnung mit einem rohrförmigen Gehäuse (3) für eine Energieübertragungseinrichtung, mit einem elektrischen Leiter (2) und mit einem Stützelement (6) zum Abstützen des elektrischen Leiters (2) an dem rohrförmigen Gehäuse (3),
**dadurch gekennzeichnet, dass**
die Ausdehnung des Stützelementes (6) in Stützrichtung veränderbar ist.

2. Anordnung nach Anspruch 1,
**dadurch gekennzeichnet, dass**
die Änderung der Ausdehnung des Stützelementes (6) durch eine veränderlich befüllbare Expansionskammer bewirkbar ist.

3. Anordnung nach einem der Ansprüche 1 und 2,
**dadurch gekennzeichnet, dass**
das Stützelement (6) reversibel verformbar ist.

4. Anordnung nach einem der Ansprüche 1 bis 3,
**dadurch gekennzeichnet, dass**
das Stützelement (6) an dem elektrischen Leiter (2) neben einer festen Halterung (4, 5) des elektrischen Leiters (2) angeordnet ist.

5. Anordnung nach einem der Ansprüche 2 bis 4,
**dadurch gekennzeichnet, dass**
die Expansionskammer kissenartig zwischen dem elektrischen Leiter (2) und einer Innenwandung des rohrförmigen Gehäuses (3) angeordnet ist.

6. Anordnung nach einem der Ansprüche 1 bis 5,
**dadurch gekennzeichnet, dass**
das Stützelement (6) im Wesentlichen aus einem befüllbaren flexiblen Kissen besteht.

7. Anordnung nach einem der Ansprüche 1 bis 6,
**dadurch gekennzeichnet, dass**
das Stützelement (6) eine schwingungsdämpfende Transportsicherung ist.
